# EUROPÄISCHE PATENTSCHRIFT

(11) **EP 2 317 329 B1**
(45) Veröffentlichungstag und Bekanntmachung des Hinweises auf die Patenterteilung: **25.05.2016**
(21) Anmeldenummer: 10009607.2
(22) Anmeldetag: 15.09.2010
(51) Int. Cl.: H02S 50/10

(54) **Gleichstrommessstelle zum Auffinden defekter PV-Module in einer PV-Anlage**
Direct current metering point for detecting defective PV modules in a PV assembly
Poste à courant continu destiné à trouver des modules PV défectueux dans une installation photovoltaïque

(30) Priorität: 08.10.2009 DE 102009048691
(43) Veröffentlichungstag der Anmeldung: 04.05.2011
(73) Patentinhaber: Adensis GmbH, 01129 Dresden (DE)
(72) Erfinder: Beck, Bernhard, 97332 Volkach OT Dimbach (DE)

(56) Entgegenhaltungen:
- EP-A1- 0 050 705
- EP-A1- 1 574 822
- EP-A2- 0 677 749
- DE-A1- 2 843 026
- DE-A1- 19 914 336
- DE-A1-102007 044 166
- JP-A- 2005 340 464
- US-A- 4 528 503
- US-A1- 2006 162 772
- US-A1- 2009 222 224
- CHAUVIN ARNOUX: 'GREENTest-FTV 100 Testing instrument for photovoltaic installations - Manual' 31 Juli 2010, XP055235729

## Beschreibung

Die Erfindung bezieht sich auf ein Verfahren gemäß Anspruch 1 zum Auffinden eines defekten PV-Moduls innerhalb einer größeren PV-Anlage und auf eine zugeordnete Vorrichtung gemäß Anspruch 12.

Große PV-Anlagen können Tausende von PV-Modulen umfassen, die einzeln ausge-messen werden müssen, um ein schadhaftes Modul zu erkennen und zu lokalisieren. Dieser Aufwand ist notwendig, da das Vorhandensein eines einzigen oder auch mehrerer defekter Module bei der Gesamtleistung nicht weiter auffällt. Ein defektes Modul, bei dem eine Photovoltaikzelle nichtleitend ist oder bei dem die Lötverbindung zwischen zwei Zellen unterbrochen ist, führt zu einem Ausfall des gesamten Stranges von z.B. zehn in Serie geschalteten PV-Modulen, da eine einzige Unterbrechung auch die Serienverbindung unterbricht. Bei einer Leistung von 2 MW entspricht der Beitrag eines Strangs von z.B. 2 KW einem Tausendstel der Leistung. Selbst mehrere über die Zeit defekte Stränge fallen nicht sofort auf, da die Abweichung in der generierten Leistung auch Wetter bedingt sein kann. Permanent installierte Systeme zur Leistungsmessung sind mit einem nicht vertretbaren Kostenaufwand verbunden.

Neben obigem Problem der nicht entdeckten Minderleistungsfähigkeit der PV-Anlage ist es insbesondere im Garantiezeitraum wichtig, dass gerechtfertigte Reklamations-möglichkeiten erkannt werden, um den Hersteller des defekten PV-Moduls in die Pflicht zu nehmen.

Mit dem heutigen Stand der Technik sind verschiedene Möglichkeiten der Überprüfung der Leistungsfähigkeit von PV-Modulen bekannt. Bei allen Verfahren, welche ein aussagekräftiges Ergebnis liefern, muss die PV-Anlage vom Wechselrichter entkoppelt und an ein Messgerät angeschlossen werden.

Als Messgerät kommen hierbei Multimeter zum Einsatz, in dem diese den Kurzschlussstrom und die Leerlaufspannung eines PV-Moduls, Stranges oder einer PV-Einheit bestimmen. Ziel dieser Messung ist, die grundsätzliche Funktion des PV-Moduls, Stranges bzw. der PV-Einheit zu erkennen.

Soll die Leistungsfähigkeit eines PV-Moduls, Stranges oder einer PV-Einheit ermittelt werden, so geschieht dies vorzugsweise durch das Anschließen eines U-I-Kennlinienmessgerätes, welches die entsprechende U-I-Kennlinie messen kann. Die so gemessene Kennlinie wird ergänzt um den Messwert eines Einstrahlungssensors bzw. einer Referenzsolarzelle sowie des Messwertes eines Temperaturfühlers, welcher die Temperatur des PV-Moduls misst. Der STC-Leistungswert (Standardisierter Leistungswert für Photovoltaikmodule) errechnet sich aus den oben genannten Werten -Einstrahlung, Temperatur, Spannung und Strom - zusammen. Dieser hat jedoch aufgrund der vielen Toleranzen bei den Sensoren, welche zur Berechnung herangezogen werden, eine hohe Ungenauigkeit.

Die Druckschiften EP 0 677 749 A2, JP 2005 340 464 A und US 2009/0222224 A1 offenbaren jeweils Verfahren und Vorrichtungen zur Ermittlung von defekten PV-Einheiten.

Weiterhin ist aus dem Stand der Technik das Messen mit einer Stromzange bekannt, da man mit dieser im laufenden Betrieb die Stromstärke eines PV-Moduls, Stranges oder einer PV-Einheit ermitteln kann. Da jedoch Spannung, Einstrahlung und Temperatur unbekannt sind, genügt diese Art der Messung lediglich der reinen Überprüfung der Funktionalität sowie der Überprüfung von Sicherungen. Alle zum Stand der Technik gehörenden Verfahren und Vorrichtungen haben hinsichtlich Genauigkeit, Zeitaufwand und Anwendbarkeit während des Betriebes keine ausreichend präzise Aussagekraft.

So liegt vorliegender Erfindung die Aufgabe zugrunde, einen defekten Strang, in welchem ein defektes PV-Modul sein muss, mit wenig technischem und zeitlichem Aufwand zu erkennen.

Diese Aufgabe wird bezüglich des Verfahrens durch eine zeitgleiche Messung der Ströme zweier PV-Einheiten mittels zweier Stromzangen und einer Messdaten-erfassungseinheit, welche die Messwerte für eine Ermittelung der Leistungsfähigkeit der betreffenden PV-Einheiten einer Auswerteeinheit bereitgestellt, gelöst. Dabei können folgende Unterscheidungen getroffen werden: a) bei baugleichen PV-Einheiten, die auf derselben Betriebsspannung arbeiten, wird die PV-Einheit mit geringerem Strom als die PV-Einheit geringerer Leistung ermittelt, b) bei baugleichen PV-Einheiten, die auf unterschiedlicher Betriebsspannung arbeiten, wird die PV-Einheit mit geringerem Produkt von gemessenem Strom und ermittelter Betriebs-spannung bei der dem jeweiligen Stromwert zugeordneten PV-Einheit als die PV-Einheit geringerer Leistung ermittelt, c) bei nicht-baugleichen PV-Einheiten, die auf derselben Betriebsspannung arbeiten, wird die PV-Einheit mit geringerem Strom als die PV-Einheit geringerer Leistung ermittelt, und d) bei nicht-baugleichen PV-Einheiten, die auf unterschiedlicher Betriebsspannung arbeiten, wird die PV-Einheit mit geringerem Produkt von gemessenem Strom und ermittelter Betriebsspannung bei der dem jeweiligen Stromwert zugeordneten PV-Einheit als die PV-Einheit geringerer Leistung ermittelt.

Bei der vorliegend verwendeten Terminologie wird unter einer PV-Einheit dabei sowohl ein einzelnes Modul, als auch ein einzelner Strang, als auch ein aus mehreren parallelen Strängen aufgebautes PV-Feld angesehen. Bei den zur Zeit in der Diskussion stehenden Großanlagen von 100 MW oder mehr können auch komplette PV-Anlagen als PV-Einheit im vorliegenden Sinne verstanden werde, wenn mehrere dieser PV-Anlagen ein räumlich zusammenhängendes Gesamtsystem bilden.

In einer praktischen Vorgehensweise werden zuerst die Ströme von zwei PV-Feldern miteinander verglichen. Dabei spielt es keine Rolle welche der beiden vorhandenen Anschlussleitungen für den Messvorgang herangezogen wird. Wichtig ist es, dass die Messung zeitgleich erfolgt, damit zum Messzeitpunkt dieselben Rahmenbedingungen vorliegen. Dieses sind im Wesentlichen die Temperatur der PV-Zellen und die zwischen den Anschlussleitungen anliegende Spannung. Wenn alles in Ordnung ist, müssten zwei gleich aufgebaute PV-Felder, die auf derselben Spannung arbeiten, auch denselben Gleichstrom erzeugen, es sei denn, dass einer der Stränge eines der Felder defekt ist Ist einer der gemessenen Ströme ungewöhnlich geringer, z.B. eine Verminderung um mehr als 5%, als der andere zeitgleich gemessene Strom, so wird als nächster Schritt weiter in die Tiefe gemessen, indem die Ströme zweier Stränge des defekt vermuteten PV-Feldes analog wie zuvor gemessen und miteinander verglichen werden. Liegt die Abweichung beider Ströme im Toleranzbereich von z.B. den genannten 5%, so sind beide Stränge in Ordnung und die Messung wird an zwei anderen Strängen desselben Feldes wiederholt. So wird Strang um Strang miteinander verglichen, bis der Strang identifiziert ist, der unterbrochen ist, oder einen nicht tolerierbaren Minderstrom führt. Das defekte Modul im Strang kann dann mit wenig weiterem Aufwand bestimmt werden.

Bei nicht baugleichen PV-Einheiten wird zunächst eine zeitgleiche Messung (zum Teil auch Feststellung genannt) der Ströme durch je eine Anschlussleitung der beiden PV-Einheiten vorgenommen. Dann wird in einem entsprechenden Bauteil das Verhältnis der beiden Ströme zueinander gebildet. Schließlich wird durch Vergleich des Verhältnisses mit einem Vergleichsverhältnis, welches aus Messwerten der Gleichströme durch die je eine Anschlussleitung der beiden PV-Einheiten zu einem früheren Zeitpunkt als dem Zeitpunkt der aktuellen Messung oder Feststellung gebildet wurde, ermittelt, ob eine Veränderung der Leistungsfähigkeit in einer der PV-Einheiten eingetreten ist.

Bei einer Anlage mit nicht-baugleichen PV-Einheiten liegt die Schwierigkeit vor, dass die PV-Felder z.B. zehn oder nur acht Stränge aufweisen oder auch die Stränge unterschiedliche Anzahlen an PV-Modulen besitzen. Theoretisch könnte auch das erste Verfahren Anwendung finden, wenn eine Tabelle mit Korrekturfaktoren erstellt wird, die der Unterschiedlichkeit Rechnung trägt und bei den vergleichenden, zeitgleichen Strommessungen die einzelnen Strommessungen entsprechend gewichtet werden.

Einfacher ist die oben genannte vorteilhafte Ausführungsform, bei der ohne Kenntnis der Unterschiede die Ströme zweier PV-Felder zeitgleich gemessen und zueinander ins Verhältnis gesetzt werden. Dieses kann zweckmäßigerweise in zeitlicher Nähe zur Errichtung der PV-Anlage geschehen, wenn davon auszugehen ist, dass die gelieferten und getesteten PV-Module bei der Inbetriebnahme der PV-Anlage in Ordnung sind. Dann liegt ein Verhältnis der Performance der beiden PV-Einheiten vor, bei dem andere Parameter wie die aktuelle Sonneneinstrahlung, die herrschende Temperatur etc. ausgeklammert sind, da sie für beide PV-Einheiten gleichermaßen gelten. Zu einem späteren Zeitpunkt, zum Beispiel einige Monate vor. Ablauf der Garantiefrist oder bei einer mangelnden Leistung der Anlage wird die Strommessung an den PV-Einheiten wiederholt. Wenn das Verhältnis noch gleich ist, kann mit einiger Wahrscheinlichkeit auf den korrekten Zustand der PV-Einheiten geschlossen werden, da ein gleich wirkender Mangel bei beiden PV-Einheiten eher unwahrscheinlich ist. Ist das Verhältnis hingegen abweichend, so muss in Abhängig der Richtung der Änderung die eine oder das andere verglichene PV-Einheit mangelhaft sein.

In diesem Zusammenhang ist es sinnvoll, wenn bei einer PV-Anlage die aus mindestens drei PV-Einheiten besteht, folgende Schritte ablaufen: i) bei allen vorhandenen PV-Einheiten wird zeitgleich an jeweils zwei, ein Paar bildende PV-Einheiten eine Strommessung vorgenommen, bis der Strom jeder PV-Einheit zumindest einmal gemessen wurde; ii) die beiden zu jedem Paar gemessenen Stromwerte werden zueinander ins Verhältnis gesetzt; und iii) die Verhältnisse werden in einem elektronischen Speicherelement abgelegt. Bei dieser Vorgehensweise ist es wiederum von besonderem Vorteil, wenn die Paarbildung bei der Strommessung nach Schritt i) an benachbarten PV-Einheiten vorgenommen wird, wobei die Paare von benachbarten PV-Einheiten so gewählt werden, dass zumindest teilweise eine zusammenhängende Kette von Paaren als Glieder gebildet wird. Der Vorteil (auch ohne Paarbildung) wird anhand eines Beispiels deutlich:
Es wird bei einer PV-Anlage mit n=100 Feldern zu je 10 Strängen mit je acht PV-Modulen bei den Feldern 1 und 2, die dann als PV-Einheit im Sinne der Ansprüche anzusehen sind, mit der Vergleichsmessung begonnen, wobei sich ein Verhältnis von 1:1 = 1 ergibt, also identische Stromwerte. Bei der nächsten Messung werden die Felder 2 und 3 miteinander verglichen, wobei sich ein Verhältnis von 1,1:1 = 1,1 ergibt. Bei der folgenden Messung mit den PV-Feldem 3 und 4 liegt ein Verhältnis von 0,98:1 = 0,98 vor usw. Es werden 99 dieser fortschreitenden Messung durchgeführt, bis zur letzten Messung zwischen den PV-Einheiten oder Feldern n-1 und n. Dadurch lässt sich ein Zusammenhang zwischen allen Feldern berechnen, der z.B. beim ersten Feld zum letzten Feld der Multiplikation aller 99 Verhältnisse oder Faktoren ist. Zwischen dem ersten Feld und dem vierten Feld ist der Zusammenhang 1 mal 1,1 mal 0,98 = 1,078. Wird nun zu einem späteren Zeitpunkt an einer der PV-Einheiten der absolut vorliegende Strom gemessen, so kann in einer Recheneinheit aus dem absoluten Stromwert und den ins Verhältnis gesetzten abgespeicherten Messwerten der Gesamtstrom oder die Gesamtleistung der Photovoltaikanlage bestimmt werden, wie sie vorherrschen würde, wenn keine Störung, Degradation oder Defekte vorlägen. Ist der theoretisch ermittelte Gesamtwert der PV-Anlage deutlich höher als der momentan zum Zeitpunkt der Einzelmessung an einer der PV-Einheiten vorgelegene Einspeisewert, so können Rückschlüsse auf einen Fehler gezogen werden. Bei einer Einspeisung über mehrere Wechselrichter sollten die PV-Einheiten während der zeitgleichen Messung auf den gleichen Spannungswert gesetzt werden, der dann auch bei der späteren Strommessung zur Ermittlung der Gesamtleistung der PV-Anlage einzustellen ist.

Vorteilhaft ist die angesprochene Gliederbildung der Paare. Wenn von einem "Strompaar" die Rede ist, wird darunter immer das Wertepaar der beiden zeitgleich gemessenen Ströme verstanden. Der Vorteil liegt in der vereinfachten Zuordnung der Messstelle zu den gemessenen Stromwerten. Prinzipiell kann in der Anlage jedes beliebige Feld mit jedem anderen Feld zu einem Paar kombiniert werden. Dann muss aber für die spätere Messung die gleiche Zuordnung vorliegen, da die gebildeten Verhältnisse untereinander nur für dieses eine Paar gelten. Diese identische Zuordnung ist schwieriger vorzunehmen bei beliebig gewählten Paaren als bei Paaren von benachbarten PV-Einheiten. Die Zuordnung spielt für den Monteur eine Rolle, der mit der Messvorrichtung an die zu Messenden Felder gehen muss. Liegen diese weit auseinander, muss er mit Verlängerungsleitungen arbeiten, die Hunderte von Metern lang sein und damit auch das Ergebnis verfälschen können. Ein Messung bei benachbarten PV-Feldern kann dagegen mit einer Zuleitung zu den Messmitteln, in der Regel Stromzangen, von wenigen Metern erfolgen. Die Bildung der Verhältnisse unter benachbarten Paaren hat noch den Vorteil, dass die PV-Zellen - Temperatur bei benachbarten PV-Einheiten zumindest ähnlich ist. Eine Wolke wird sich nicht, eine längere Auskühlungszeit bewirkend, scharfkantig an eine geometrische Trennlinie der PV-Einheiten am Boden halten, sondern die benachbarten Felder eher gleichmäßig abschatten.

In diesem Zusammenhang ist auch eine Querkontrolle sinnvoll, bei der nach einer vorgegebenen Anzahl, z.B. nach zehn, in einer bestimmten Reihenfolge gemes-senen Stromwertepaaren eine Quermessung vorgenommen wird, bei der zeitgleich der Stromwert der vormals ersten gemessenen PV-Einheit und der der letzten gemessenen PV-Einheit ermittelt, zueinander ins Verhältnis gesetzt und mit dem Produkt der zehn Einzelverhältnisse verglichen werden. Wurde z.B. anhand der zehn Einzelmessungen an den zehn PV-Einheiten-Paaren eine Reihe von zehn Verhältnissen errechnet, dass insgesamt 1:1,1 (entsprechend dem Produkt der zehn Einzelverhältnisse) ergibt, so müsste bei einwandfreier Kalibrierung der Stromzangen auch das Querverhältnis des Stroms der ersten PV-Einheit zum Strom der zuletzt gemessenen PV-Einheit 1:1,1 betragen. Ist dieses nicht der Fall, indem sich z.B. ein Verhältnis von 1:1,15 ergibt, so kann auf eine nicht optimale Kalibrierung geschlos-sen werden und die zehn errechneten Einzel-Verhältnisse können korrigiert werden, in dem die Differenz, e.g. 0,05, auf alle zehn Verhältnisse gleichmäßig aufgeteilt wird. Dies entspricht eine Erhöhung um 0,005 bei jedem der zu den zehn PV-Einheiten-Paaren errechneten Verhältnisse.

Eine Erleichterung für das die Messungen vornehmende Personal ist es auch, wenn bei jeder Messung nach Schritt i) eine Identifikation der Messstelle, insbesondere der Ort der Messung, registriert wird und zusammen mit dem an dem Ort gemessenen Wert des Strompaares oder des daraus errechneten Verhältnisses abgespeichert wird. Der Ort der Messung kann dabei mittels GPS, eines RFID Chip oder mittels eines Barcodelesers zum Zeitpunkt der Stromerfassung mit aufgenommen werden. Der Chip oder die RFID - Etikette ist an einer Stelle des Traggerüsts für die PV-Anlage dauerhaft angebracht. Sind die PV-Einheiten bei der Paarbildung zueinander benachbart, braucht der Monteur lediglich von Messstelle zu Messstelle zu gehen, die Stromzangen um je eine Zuleitung legen, den Messvorgang starten und nach der Messung zur nächsten Messstelle wandern. Dieser Vorgang kann bei der erstmaligen Aufnahme der Gegebenheiten, i.e. der Verhältnisbildung, so weit protokolliert werden, dass der Monteur bei der wiederholten Messung oder Überprüfung lediglich zum Anfang der Kette geht und dort beginnt. Nach erfolgter Messung und ggf. Verhältnisbildung wird ihm dies durch eine LED am Messgerät signalisiert und er geht zur nächsten Messstelle. Die Messung wird erst freigegeben, wenn eine weitere, andersfarbige LED ihm dies signalisiert. Die Signalisierung erfolgt, wenn entweder das korrekte GPS Signal mit "Ziel erreicht" übertragen wird, die Transponderreaktion mit der RFID-Etikette positiv ist, der korrekte, zuvor abgespeicherte Barcode eingelesen wurde oder dergleichen. Erst dann weiß der Monteur, dass er an der vorgesehenen nächsten Messstelle ist und die ermittelten Werte auch die beabsichtigten sind.

Bei weniger gut ausgebildeten Kräften ist es auch denkbar auf jedwede Reihenfolge bei der Messwertaufnahme zu verzichten und sich nur auf die korrekt erfolgte Korrelation von Messort und Messwert zu verlassen. Die Recheneinheit kann dann das Vorliegen aller erforderlichen, das heißt zu jedem Paar mindestens einer, Messwerte feststellen und ggf. in eine vorgegebene Reihenfolge sortieren. Die Vorgehensweise von benachbarten zu benachbarten PV-Einheiten zu wechseln, ist insbesondere bei fehlender Positionsfeststellung vorzunehmen.

Die Bildung der Verhältnisse zwischen den beiden zeitgleich gemessenen Gleichstromwerten zueinander kann direkt vor Ort erfolgen, oder aber die Messwerte jeden Paares werden zusammen mit der Identifikation drahtlos an eine Datenver-arbeitungsstelle gesendet, wo sie abgespeichert und weiterverarbeitet werden.

Zur Erzielung einer hohen Zuverlässigkeit der abgespeicherten Verhältnisse es sinnvoll, die Strommessung kurz (z.B. einige Millisekunden) hintereinander mehrere Male, z.B. fünf bis zehn Mal, vorzunehmen und das arithmetische Mittel über die kurz hintereinander vorgenommenen Strommessungen zu bilden. Das Verhältnis wird dann aus den arithmetischen Mitteln der Stromwerte gebildet und ist damit auf eine solidere Basis gestellt. Zusammen mit den Messwerten des Gleichstroms oder der Verhältnisse kann auch der, z.B. am Wechselrichter gemessene, Spannungswert zwischen den beiden Anschlussleitungen der PV-Einheit abgespeichert werden.

Da jede Messung über die spätere Multiplikation der Verhältnisse auch einen Beitrag zur Messungenauigkeit liefert, ist es zur Sicherstellung einer tolerablen Messab-weichung vorgesehen, nach jeder dritten bis zwanzigsten Messung, vorzugsweise nach jeder fünften bis zehnten Messung, eine Kalibrierung der Messvorrichtung vorzunehmen.

Das vorgestellte Verfahren ist nicht zur täglichen Anwendung vorgesehen, sondern eher zur Überprüfung der Leistungsfähigkeit der PV-Anlage in regelmäßigen Zeitabständen von z.B. einigen Monaten. Insofern ist es vertretbar, dass alle PV-Einheiten, die auf denselben Wechselrichter geschaltet sind, während aller Gleichstrommessungen auf eine konstante Spannung gehalten werden, indem der MPP (Maximal Power Point) - Regler des Wechselrichters auf den konstanten Spannungswert fixiert wird.

Zur Beurteilung, inwieweit eine einzelne PV-Einheit gegebenenfalls von ihrer zu erwartenden Leistung abweicht, ist es zweckmäßiger Weise vorgesehen, dass eine einzige der PV-Einheiten mittels Strommessung, Spannungsmessung, Einstrahlungs-intensität und direkter oder indirekter Temperaturmessung am Halbleiter als Referenz-PV-Einheit nach dem für Photovoltaikmodule zur Ermittlung der Norm-leistung festgelegten, standardisierten Testbedingungen (STC) ermittelt wird, um dann die Normleistung (nach STC) einer, mittels der Stromwertpaare verketteten PV-Einheit zu errechnen.

Insbesondere bei gleich aufgebauten PV-Einheiten kann eine solche Abschätzung zur individuellen Performance einer PV-Einheit auch durch Vergleich mit einer Referenz-PV-Einheit erfolgen, die zuvor als solche definiert wurde. Dies ist vorteilhafterweise diejenige PV-Einheit, die bei der erstmaligen Leistungsermittlung an einem Wetter bezogenen Idealtag, z.B. anlässlich der Inbetriebnahme der Photovoltaikanlage, die höchste Leistung erzeugt hat. Diese Leistung wird dann als bestmögliche Referenz für den verbauten Typ an PV-Einheit herangezogen. Weicht die Leistung einer anderen, beliebigen PV-Einheit von einem Grenzwert von z.B. 95% der Referenzeinheitsleistung nach unten ab, wird auf eine schadhafte Montage oder ein defektes Bauteil geschlossen.

Bezüglich der Vorrichtung wird die eingangs vorgebrachte Aufgabe durch ein Strommessgerät gemäß Anspruch 12 oder den dass abhängigen Ansprüchen. gelöst. Die Stromzangen werden um jeweils eine der zu einer PV-Einheit gehörigen zwei Anschluss- oder Zuleitungen gelegt. Da solche Stromzangen zur Gleichstrommessung mit Magnetfeldern arbeiten, ist eine regelmäßige Kalibrierung erforderlich, was durch eine integrierte Gleichstromquelle, die einen Messshunt speist, erfolgt. Die Stromzangen werden um einen elektrischen Leiter, vorzugsweise einen Bügel, durch welchen ein von der Gleichspannungsquelle generierter Kalibrierstrom fließt, gelegt. Der Leiter ist zur gleichzeitigen Aufnahme beider Stromzangen ausgelegt, so dass auch der Kalibriervorgang für beide Stromzangen identisch abläuft.

Zur mehr kontinuierlichen Überprüfung des Leistungsverhaltens der PV-Anlage ist eine alternativ eine stationäre Stromstärkenmesseinheit vorgesehen, die den absoluten Strom einer einzigen der PV-Einheiten misst und das Ergebnis zur Verarbeitung an eine Recheneinheit weiterleitet, die aus den Verhältnissen und dem stationär ermittelten Stromwert, sowie der an dem oder an den Wechselrichtern anliegende Spannung die theoretische Gesamtleistung der Anlage errechnet. Diese wird dann mit dem zum Messzeitpunkt angezeigten aktuellen Leistungswert verglichen und lässt Rückschlüsse auf eine kontinuierliche Degradation oder einen Fehler zu.

Eine weitere Ausführungsform zur Lösung eines weiterführenden Aspekts der gestellten Aufgabe bezüglich der Vorrichtung sieht vor, dass eine stationäre Stromstärke- und Spannungsmesseinheit vorgesehen ist, die den Strom einer einzigen der PV-Einheiten misst, und das Ergebnis zur Verarbeitung an eine Recheneinheit weiterleitet, die aus den Verhältnissen der Stromwertpaare und dem stationär ermittelten Stromwert, sowie den zu den Stromwertpaaren ermittelten Spannungswerten und dem stationär ermittelten Spannungswert die theoretische Gesamtleistung der Anlage errechnet.

Weitere Vorteile und Ausgestaltungen der Erfindung ergeben sich aus der Beschreibung eines Ausführungsbeispiels anhand der Figuren. Es zeigen:
- Fig.1: mit der Detailansicht von Fig. 1 a den prinzipiellen Aufbau eines größeren Photovoltaiksystems,
- Fig.2: eine Mess- und Auswerteeinheit zum Einsatz in einer Anlage nach der Fig. 1, und
- Fig.3: ein die Mess- und Auswerteeinheit beherbergendes Gehäuse mit Bügel und Kalibrierleiter.

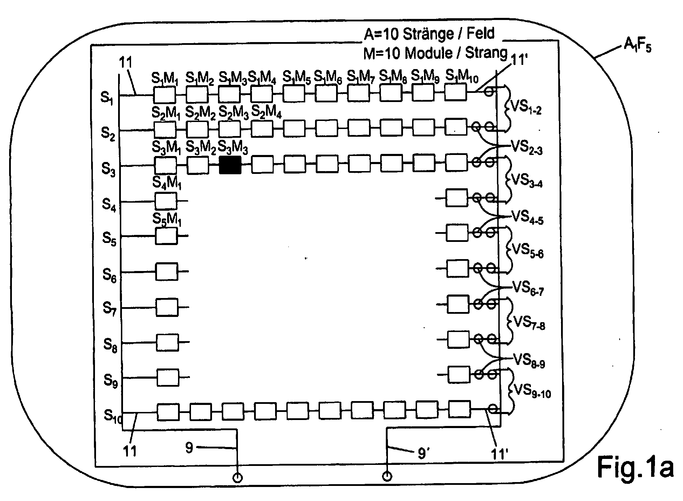

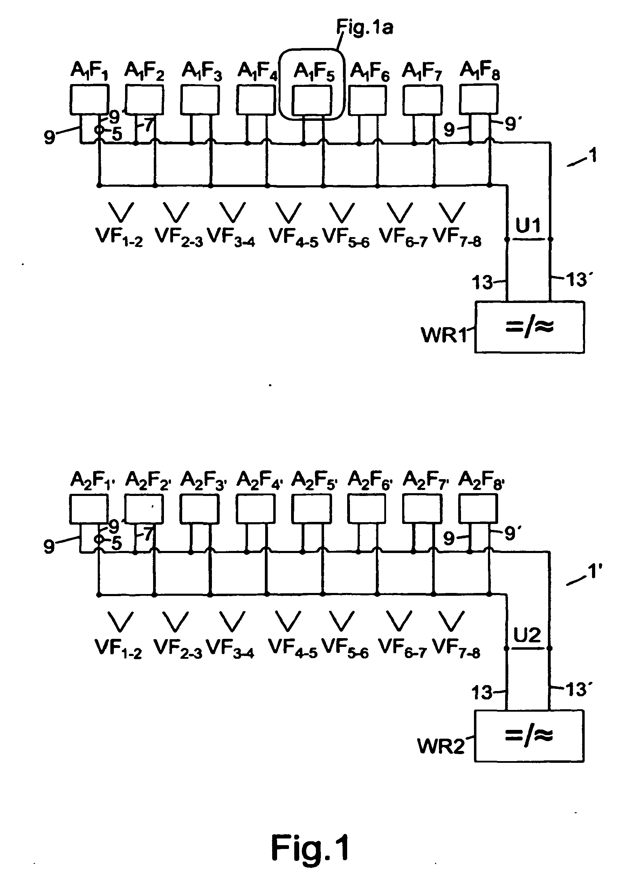

In der Figur 1 ist mit A₁ bzw. mit A₂ eine erste und eine zweite Photovoltaikanlage bezeichnet, die bautechnisch gleich ausgeführt sind. Das heißt, dass jede PV-Anlage 1,1' acht Felder F₁ bis F₈ bzw. F_{1'} bis F_{8'} besitzt, bei deren Bezeichnung noch das Präfix A, für Anlage 1 bzw. A₂ für Anlage 2 vorangestellt ist. Im Detail wird nur auf die erste Anlage A₁ eingegangen.

Wie zuvor ausgeführt, besitzt die erste Anlage A₁ acht Felder A₁F₁, A₁F₂, ... bis A₁F₈ die wiederum alle gleich aufgebaut sind. Wie es am Beispiel des Feldes A₁F₅ (Anlage 1, fünftes Feld) in der Detailfigur 1a ersichtlich ist, besitzt jedes Anlagenfeld AF zehn elektrisch parallel geschaltete Stränge S, die mit S₁ bis S₁₀ durchnummeriert sind. Jeder Strang S₁ bis S₁₀ wiederum weist eine Reihenschaltung von 10 PV-Modulen M auf, die ihrerseits mit M₁ bis M₁₀ durchnummeriert sind. Ein einziges von den Einhundert PV-Modulen S₁M₁ bis S₁₀M₁₀ ist voll schwarz ausgelegt, nämlich das Photovoltaikmodul S₃M₃ von dem angenommen wird, dass es defekt ist. Jedes Modul M besteht aus ca. 60 PV-Zellen, die in Reihe geschaltet sind. Die PV-Zelle ist die kleinste Einheit, in der die Sonnenstrahlen in Strom umgewandelt werden. Die 60 Zellen sind miteinander in Reihe geschaltet, so dass sich bei einer Arbeitsspannung von 1 Volt pro Zelle eine Spannung von 60 Volt über das Modul aufbaut. Bei zehn in Reihe geschalteten Modulen beträgt dann die Spannung über den gesamten Strang, auch als Strangspannung bezeichnet, 600 Volt. Wenn eine einzige der 10 mal 60 = 600 Zellen eines Strangs S nichtleitend wird, oder eine der Verbindungen zwischen den Zellen unterbrochen wird, fällt als Folge der Reihenschaltung der gesamte Strang S für die Stromlieferung aus. Beispielhaft ist ein solcher Fall bei dem Modul S₃M₃ unterstellt und es wird anschließend erläutert, wie der Strang S und später auch das Modul M identifiziert werden können.

Die zugrunde liegende Problematik ist deswegen von Bedeutung, da je nach Größe des PV-Systems, wie es im einleitenden Teil angesprochen ist, es nicht weiter auffällt, wenn ein einzelner Strang ausfällt, da sein Beitrag zur Gesamtleistung relativ gering ist. Andererseits verhält es sich wie bei einem tropfenden Wasserhahn, der nur geringe Mengen an Wasser verliert, sich diese geringe Mengen aber über die Zeit, im PV-Anlagenbau über mehrere Jahrzehnte zu einem bedeutenden Verlust addieren. So ist es aus wirtschaftlichen, wie auch aus in der Garantie begründeten Zwecken erforderlich, den Leistungszustand nicht nur der Gesamtanlage, sondern auch von einzelnen PV-Einheiten der Anlage beurteilen zu können.

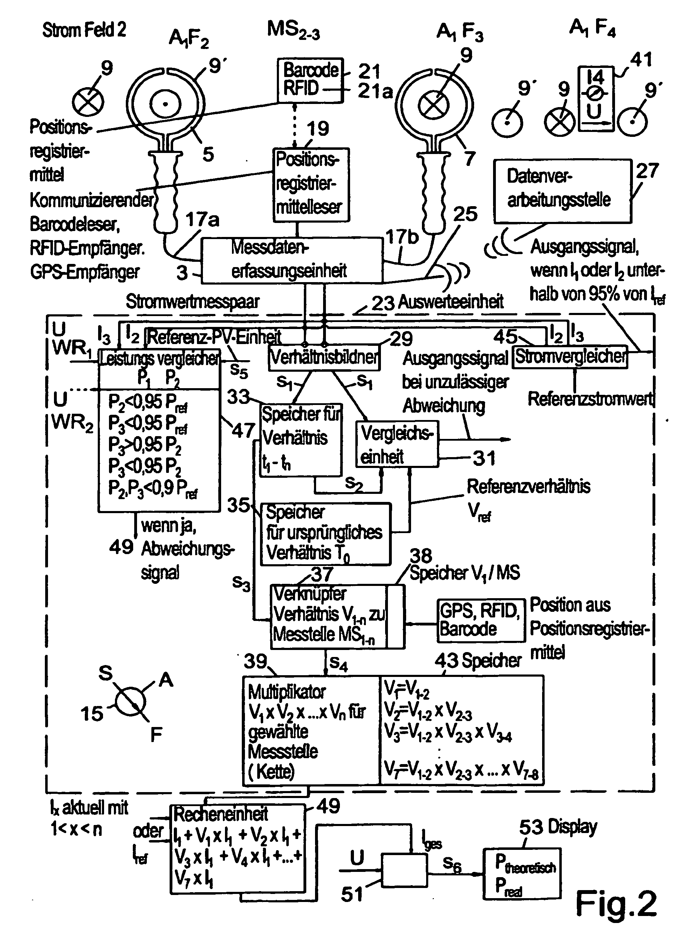

Zu diesem Zweck wird das in den Figuren 2 bis 3 näher beschriebene Mess-und Auswertegerät 3 wie folgt eingesetzt. Das Gerät besitzt zwei Stromzangen 5 und 7, die geeignet sind, um eine der beiden elektrischen Zuleitungen 9,9' der Felder F, einer der beiden Zuleitungen 11,11' zu den Strängen S oder einer der beiden Zuleitungen 13,13' zu einem Wechselrichter WR angebracht zu werden. Solche Stromzangen für die Messung von Gleichströmen sind sattsam bekannt. Die Stromzangen 5,7 sind an eine Auswerteeinheit 15 angeschlossen, auf die später noch eingegangen wird.

Zunächst soll die Vorgehensweise zur Identifikation des defekten Stranges S₃ erläutert werden. Dazu wird aus Gründen der Anschaulichkeit davon ausgegangen, dass alle PV-Module M ansonsten gleich und perfekt arbeiten. Als erstes wird die erste Stromzange 5 um eine der Zuleitungen 13,13' zum ersten Wechselrichter WR₁ gelegt und die zweite Stromzange 7 um eine der Zuleitungen 13,13' des Wechselrichters WR₂. Da die Anlage A₁ das defekte Modul hat wird sie weniger Strom und damit Leistung erzeugen als die PV-Anlage A₂. Beim Messvorgang selber müssen, um eine Voraussetzung für die Vergleichbarkeit der Ströme zu schaffen, die Arbeitsspannung U₁ und U₂ der beiden Wechselrichter WR₁ und WR₂ auf denselben Spannungswert gesetzt werden. Dies geschieht über einen Eingriff am MPP Regler, wie er auf dem Fachgebiet der Solartechnologie üblich ist. Durch diesen ersten Schritt wird also festgestellt, dass der Fehler, der zu einer Leistungsminderung führt, im Anlagenteil A₂ liegen muss.

Als nächstes wird eine der Stromzangen 5,7 um eine der Zuleitungen 9,9' des ersten Feldes A₁F₁ und die andere Stromzange 9,9' um eine der Zuleitungen des zweiten Feldes A₁F₂. Sind beide zeitgleich gemessenen Ströme gleich groß, so müssen die zugehörigen Felder A₁F₁ und A₁F₂ ebenfalls gleich sein, d.h. es liegt im Normalfall eine ungestörte Stromerzeugung vor. Der Fall, dass beide Felder A₁F₁ und A₁F₂ den gleichen Fehler aufweisen, ist sehr unwahrscheinlich und wird z.Zt. nicht weiter berücksichtigt. Die gemessenen Ströme werden zueinander ins Verhältnis gesetzt, dessen Wert mit VF₁₋₂ bezeichnet wird (Verhältnis Feld zwischen Feld 1 und Feld 2). Bei gleichen Strömen beträgt das Verhältnis VF₁₋₂ gleich 1:1=1. Anschließend wird eine der Stromzangen 5,7 um eine der Zuleitungen 9,9' des zweiten Feldes A₁F₂ und die andere Stromzange 7 um eine der Zuleitungen 9,9' des dritten Feldes A₁F₃ gelegt. Dazu wäre es theoretisch ausreichend, wenn nur die Stromzange 5,7, die zuvor am ersten Feld A₁F₁ lag auf das dritte Feld A₁F₃ umgesetzt wird. Dieses müsste aber später bei der Verhältnisbildung berücksichtigt werden, welches dann zu invertieren ist, um nicht das Verhältnis der Ströme der Felder A₁F₃ zu A₁F₂ zu erhalten, anstelle des gewünschten Verhältnisses VF₂₋₃ der Ströme von A₁F₂ zu A₁F₃.

So werden paarweise nach und nach, vorzugsweise alle Felder F des minderleistenden Anlagenteils A₁ durchgegangen, bis beim letzten Feld F₈ die Ströme der Felder 7 und 8 miteinander verglichen und ins Verhältnis VF₇₋₈ gesetzt werden. Ist, wie im angenommenen Fall, nur der dritte Strang S₃ defekt, so ergibt sich eine Kette an Verhältnissen von VF₁₋₂ = 1, VF₂₋₃ = 1, VF₃₋₄ = 1, VF₄₋₅ = 1,11, VF₅₋₆ =0,9, VF₆₋₇ = 1 und VF₇₋₈ = 1. Prinzipiell könnte nach der Verhältnisbildung VF₅₋₆ der Vorgang abgebrochen werden, da bereits ein Fehler erkannt wurde. Spricht die anfangs im Anlagenvergleich vorgenommene Messung für mehr als einen Defekt, sollten alle Felder F untersucht werden. Nach der Ermittlung des defekten Feldes F₅ werden die Stromzangen 5,7 in analoger Weise um je eine der Zuleitungen 9 oder 9' von zwei, vorzugsweise benachbarter Strängen S gelegt. Wird beim ersten und zweiten Strang S₁ bzw. S₂ begonnen, ergibt sich, da beide Stränge S₁ und S₂ intakt sind, wieder ein Verhältnis VS₁₋₂ (Verhältnis Strang zwischen Strang 1 und Strang 2) = 1. Bei der nächsten Messung zwischen dem folgenden Strangpaar S₂ zu S₃ wird der fehlerhafte Strang S₃ mit in den Messvorgang eingeschlossen und es ergibt sich ein Verhältnis VS₂₋₃ von 1 : 0 = unendlich, da der Stromfluss im dritten Strang S₃ unterbrochen ist. Das folgende Verhältnis VS₃₋₄ wäre dann 0 : 1 = 0 und danach würden sich wieder Strangverhältnisse VS von 1 einstellen.

Das im dritten Strang S₃ beschädigte Modul S₃M₃ wird aufgrund der hohen Strangspannung vorzugsweise nachts, bei ausgeschalteter PV-Anlage ausgemessen. Dieses erfolgt z.B. über Trennen der Steckerverbindung zwischen dem fünften Modul S₃M₅ und dem sechsten Modul S₃M₅, um dann den halben dritten Strang S₃ auf Unterbrechung zu prüfen. Nach der Feststellung, dass die Unterbrechung in den ersten fünf Modulen S₃M₁ bis S₃M₅ sein muss, kann die Steckverbindung zwischen den Modulen S₃M₃ und S₃M₄ gelöst werden. Die sich anschließende Strom-Durchflussmessung würde den Fehler im ersten Teil der Module S₁M₁ bis S₃M₃ feststellen, die dann einzeln auf Unterbrechung im stromführenden Pfad zu untersuchen wären.

Mit Hilfe der vorliegenden Verhältnisse VF₁₋₂ bis VF₇₋₈ kann die Einzelleistung jedes Feldes F₁ bis F₈ über eine einzige Strommessung vorgenommen werden. Die Strommessung kann dabei stationär an einem fest an einem der Felder F installiertem Strommessgerätes oder mit einem mobilen Gerät, wie das der vorliegenden Vorrichtung erfolgen. Dazu ist es erforderlich, dass alle PV-Einheiten auf denselben Wechselrichter geschaltet sind, der während aller Gleichstrommessungen auf einer konstanten Spannung gehalten wird, indem insbesondere der MPP (Maximal Power Point) - Regler des Wechselrichters WR auf den konstanten Spannungswert fixiert wird. Bei mehreren PV-Anlagen wie die in der Figur 1 gezeigten Anlagen A₁ und A₂ muss während aller Gleichstrommessungen die Spannung auf einer konstanten Wert gehalten werden, indem der MPP (Maximal Power Point) - Regler aller Wechselrichter, hier WR₁ und WR₂, auf den konstanten Spannungswert fixiert wird.

Wird dann zum Beispiel der Stromwert des ersten Feldes F₁ gemessen, so weiß man aufgrund des zuvor ermittelten, jetzt bekannten Verhältnisses VF₁₋₂, wie der Stromwert des zweiten Feldes F₂ aussieht, da die Felder an den gleichen Wechselrichter WR₁ (oder an die angepasste Spannung bei mehreren Wechsel-richtern) und somit an der gleicher Spannung liegen. Es wird also zu einem späteren Zeitpunkt nach der Basis-Messwerterfassung an einer der PV-Einheiten der vorliegende Strom gemessen und in einer weiteren Auswerteeinheit aus dem vorliegenden Stromwert und den ins Verhältnis gesetzten abgespeicherten Messwerten der Gesamtstrom oder, unter Einbeziehung der jeweiligen Betriebs-spannungswerte der PV-Einheiten, die Gesamtleistung der Photovoltaikanlage bestimmt.

Dabei wurde die oben zu Illustrationszwecken idealer Weise angenommene Betrachtung verlassen, und es wurde von einer PV-Anlage PA₁ ausgegangen, bei denen sich die Charakteristik jedes Feldes F von den anderen Feldern unterscheidet. Diese Varianz begründet sich in der Fertigungstoleranz der PV-Module M, in Montageungenauigkeiten bei den Steckverbindungen, dem Neigungswinkel zur Horizontalen, der Krümmung des Geländegrundes etc. So ist es sinnvoll, nach erfolgter Montage der Anlage A₁ einen sogenannten Messtag abzupassen, an dem der erzeugte Strom jedes der Felder F der Anlage A₁ unter denselben Bedingungen von Temperatur, Spannung, Sonnenintensität etc. gemessen wird. Die dann ermittelten Werte für die Verhältnisse VF werden dann als Referenz-Verhältnisse in einem Speicherelement abgelegt. Zu einem späteren Zeitpunkt kann dann aus den abgelegten Referenz-Verhältnissen und dem aktuell vorliegendem Stromwert auf die theoretische Gesamtleistung der Anlage A₁ hochgerechnet werden.

Ebenfalls ist es von Vorteil, wenn bei einer einzigen der PV-Einheiten, insbesondere der Felder F, mittels Strommessung, Spannungsmessung, Einstrahlungsintensität und direkter oder indirekter Temperaturmessung am Halbleiter diese als Referenz-PV-Einheit nach dem für Photovoltaikmodule zur Ermittlung der Normleistung festgelegten, standardisierten Testbedingungen (STC) ermittelt wird, um anschließend die Normleistung (STC) einer anderen, mittels der Stromwertpaare verketteten PV-Einheit zu errechnen. Alternativ ist es auch möglich, auf das STC Verfahren zu verzichten und diejenige PV-Einheit (e.g. Feld F) als Referenzstandard zu definieren, die am Messtag den höchsten Leistungswert erreicht hat. Alle anderen PV-Felder F werden dann gegenüber diesem Optimalfeld referenziert, d.h. entsprechend den geringeren Stromwerten ins Verhältnis gesetzt. Bei einer späteren Messung müssten alle anderen Felder F bei gleichmäßiger Alterung und Degradation der Module M gegenüber diesem Referenzfeld abfallen. Wenn dies nicht der Fall ist oder wenn die Gesamtleistung unerklärlich niedrig ist, z.B. unterhalb eines Wertes von 95 % der Normleistung abgefallen ist, sind alle Felder F nochmals mit der eingangs geschilderten Methode auszumessen. Wird ein stark abweichendes Verhältnis unter den Verhältnissen VF₁₋₂ bis VF₇₋₈ festgestellt, ist das betreffende Feld F mit der für die Auffindung eines Fehlers in einem Strang S geschilderten Vorgehensweise weiter zu analysieren. Kurz zusammengefasst wird durch das zeitgleiche Feststellen der Ströme durch je eine Anschlussleitung 9,9';11,11' oder 13,13' der beiden ein Paar bildenden PV-Einheiten S, F oder A, sowie durch die Bildung des Verhältnisses VF der beiden Ströme zueinander und durch Vergleich des Verhältnisses VF mit einem Vergleichsverhältnis, welches aus Messwerten der Gleichströme gebildet wurde, die durch die je eine Anschlussleitung 9,9';11,11' oder 13,13' der beiden PV-Einheiten S, F oder A zu einem früheren Zeitpunkt als dem Zeitpunkt der Feststellung geflossen waren, die Möglichkeit eröffnet, auf einfache Weise auf das Vorhandensein eines Defekts zu schließen.

Die Anschluss- oder Zuleitungen 9,9';11,11'; 13,13' können dicht nebeneinander verlaufen oder auch eine größere Strecke voneinander beabstandet sein. Bei den Feldern F wird in der Regel keine eigene Sammelleitung gebildet, sondern die Anschlussleitungen 9,9';11,11'; 13,13' werden einzeln zu dem Wechselrichter WR geführt und laufen dort z.B. in einem Schaltschrank zusammen. Bei den Strängen S hingegen können die zugehörigen Anschlussleitungen leicht durch Inaugenschein-nahme identifiziert werde. Insbesondere bei einer Wiederholungsmessung zu einem späteren Zeitpunkt ist es erforderlich zu wissen, um welche der Anschlussleitungen 9,9';11,11'; 13,13' die Stromzangen 5,7 zu platzieren sind. Daher ist es sinnvoll, eine den Ort der Messung identifizierende Information zusammen mit dem Strommess-paar oder dem Verhältnis abzuspeichern. Diese kann bei einigen Metern auseinander liegenden Messstellen mittels GPS als Positionsregistriermittel geschehen, dass zeitgleich mit der ebenfalls zeitgleichen Messung des Stromwertpaares die Ortskoordinaten der Messung aufnimmt und abspeichert. Bei voneinander entfernteren Messstellen erfüllt auch ein RFID Chip seine Aufgabe, der an einer Stütze des betrachteten Feldes F befestigt ist und die wiederholte Messung erst freigibt, wenn das Messgerät an der durch den RFID Chip vorbestimmten Stelle ist. Der Abstand der Messstellen muss groß genug sein, damit sich die Transponder-artig arbeitenden Chips eindeutig auseinanderhalten lassen. Bei einer Messung und/oder Wiederholungsmessung auf kleinem Raum ist ein Barcode sinnvoll, der sich auf einem an der Anschlussleitung 9,9';11,11'; 13,13' angebrachten Etikett befindet. Das Etikett kann dabei direkt auf die Anschlussleitung aufgeklebt sein. Zum Zeitpunkt der Stromerfassung wird dann mittels eines geeigneten Lesegeräts, der Barcode mit registriert und mit dem Stromwertepaar oder dem Verhältnis abgespeichert. Die Messwerte jeden Paares können zusammen mit der Identifikation und ggf. der vorliegenden Betriebsspannung auch drahtlos an eine Datenverar-beitungsstelle gesendet werden, bei der dann die Verhältnisbildung, die Leistungsermittlung, die Feststellung auf Defekte usw. vorgenommen werden.

Zum Ausmitteln von Artefakten während der zeitgleichen Messung werden die von der Messdatenerfassungseinheit bereitgestellten Stromwerte nicht unmittelbar verarbeitet, sondern es wird eine Vielzahl von Messungen kurz, d.h. innerhalb weniger Sekunden oder Bruchteilen von Sekunden, vorgenommen. Anschließend wird das arithmetische Mittel gebildet, welches dann für die weitere Verarbeitung, wie dem Insverhältnissetzen herangezogen werden kann.

Mit Hilfe der Figur 2 wird im Folgenden die Vorrichtung zur Durchführung des Verfahrens beschrieben. Dazu sind beispielhaft die Felder A₁F₂ und A₁F₃ mit ihren senkrecht zur Zeichnungsebene verlaufenden Anschlussleitungen 9 und 9'. Die eine Stromzange 5 ist um die Anschlussleitung 9' des Feldes A₁F₂ gelegt und die andere Stromzange 7 um die Anschlussleitung 9 des Feldes A₁F₃. Die Stromzangen 5,7 sind Standardstromzangen, die mit einem Griffteil versehen sind, um ein einfaches und schnelles Wechseln zu ermöglichen.

Die Vorrichtung umfasst einen Wählschalter 15, der den für die Strommessung erforderlichen Messbereich vorgibt. Dieser beträgt in der Stellung A für den Strom der Anlage z.B. 1000 Ampere, für die Stellung F für den Strom eines Feldes z.B. 100 Ampere und in der Stellung S für die Strommessung an einem Strang ca. 10 Ampere. Von den Stromzangen 5,7 führen je zwei Leitungen 17a, 17b weg, die zu der Messdaten-Erfassungseinheit 3 führen. An die Messdatenerfassungseinheit 3 werden von einem Empfänger 19, der die Ortsdaten von Positionsregistriermitteln erfasst, die Identifikation des Messortes oder der Messstelle MS abgegeben. Als Positionsregistriermittel wird bei geringem Abstand der Leitungen 9,9' zwischen den Feldern A₁F₁ bis A₁F₈ bevorzugt ein Barcode 21 herangezogen, wobei der Empfänger 19 dann ein Barcodeleser ist. Der Barcode 21 kann unmittelbar an den Leitungen 9,9' angebracht sein. Bei etwas größeren Abständen zwischen den Messstellen MS ist ein RFID - Tag 21a zweckmäßig, der in der Nähe der Messstelle MS, z.B. vorliegend zwischen den Feldern A₁F₂ und A₁F₃ an dem Traggerüst (nicht gezeigt) der PV-Module M angebracht ist. Das RFID - Etikett 21a hat einen Empfangs- oder Reaktionsbereich von z.B. 2 Metern und registriert über eine Transponderfunktion, wenn sich die Messdatenerfassungseinheit 3 in seiner Nähe befindet. Wird während des Aufenthaltes der Einheit 3 innerhalb des Kommunikationsbereichs des RFID - Etiketts 21a eine Messung durchgeführt, so werden die gemessenen Stromwerte des Strompaares I₂ und I₃ zusammen mit der Identifikation der Messstelle MS₂₋₃ an eine Auswerteeinheit 23 oder per Antenne 25 drahtlos an eine externe Datenverarbeitungsstelle 27 weitergeleitet. Je nach Aufbau und Größe der Felder F kann auch zusammen mit der Messwerterfassung I₂, I₃ eine GPS - Ortung durchgeführt werden und die Koordinaten des Ortes werden direkt mit dem Stromwertpaar I₂ ,I₃ zu einem einzigen Datensatz kombiniert.

Die Auswerteeinheit 23 umfasst einen Verhältnisbildner 29, der aus den gemessenen Stromwerten I₂ und I₃ das Verhältnis, also I₂/I₃ bildet, welches als Ausgangssignal s₁ an den ersten Eingang eines Vergleichers oder einer Vergleichseinheit 31 gelegt ist. An den zweiten Eingang des Vergleichers 31 ist ein Referenzverhältnis V_{ref} gelegt, was sich aus einer frei wählbaren, früheren Messung als dem Tag der aktuell durchgeführten Messung ergeben hat, insbesondere zu dem Tag der Inbetrieb-setzung. Weicht das aktuelle Verhältnis I₂/I₃ um einen vorgebbaren Betrag, von z.B. 5 % voneinander ab, kann bereits hier auf eine Unregelmäßigkeit in der Leistungsfähigkeit eines der Felder A₁F₂ oder A₁F₃ geschlossen werde. Ist das Verhältnis I₂/I₃ größer als 1, so muss das Feld A₁F₃ einen geringeren Strom führen als erwartet. Umgekehrt führt bei einem Verhältnis I₂/I₃ kleiner als 1 das Feld A₁F₂ einen unter den Erwartungen liegenden Strom. Anstelle eines Vergleichs mit dem Referenzverhältnis V_{ref} kann auch ein Vergleich mit dem zuletzt registrierten Verhältnis V für dieses Strompaar gezogen werden. Dazu weist der Vergleicher 31 einen weiteren Eingang auf an welchen ein Signal s₂ anliegt, welches aus einem Speicherelement 33 für die Verhältnisse V ausgelesen wird. Dieser Vergleich erlaubt eine Beurteilung der Degradation oder des Fehlerauftritts zur letzten Messung und nicht mit dem, z.B. bei der Inbetriebnahme gebildeten Referenzwert V_{ref}, der in einen eigenen Speicher 35 für die Referenzwerte V_{ref} abgelegt wurde. Das Speicherelement 33 für die Verhältnisse V wird dabei ebenfalls mit dem Signal s₁ von dem Verhältnisbilder 29 versorgt.

Das Speicherelement 33 für die Verhältnisse V ist über eine Signalleitung s₃ weiterhin mit einem Verknüpfungselement 37 verbunden, welches, in analoger Weise wie zuvor bei den gemessenen Stromwerten I₂,I₃ mit den Positionsdaten der Messstelle in der Messdatenauswerteeinheit 3 kombiniert werden, diese Positions-daten auch mit den zugehörigen Verhältnissen V verknüpft. Am Ausgang des Verknüpfungselements 37 liegen dann auf einer Signalleitung s₄ die Verhältnisse V zusammen mit der Identifikation der Messstelle MS an. Die verknüpften Datenpaare von Verhältnis V einerseits und Messstelle MS andererseits sind in einem eigenen Datenspeicherelement 38 abgelegt.

Die Signalleitung s₄ führt zu einem Multiplizierglied 39, welches für vorbestimmbare Messstellen MS die Multiplikation der Verhältnisse vornimmt. Ist bei den acht Feldern F₁ - F₈ der zu erwartende Gesamtstrom I_{ges} von Interesse, so wird der Strom I₁ am ersten Feld 1 gemessen und der zu erwartende Strom I aller folgenden sieben Felder F₂ bis F₈ wird über die Addition der Stromwerte I₁ + (I₁*V₁₋₂) + (I₁*V₂₋₃) + (I₁*V₃₋₄) + ....(I₁*V₇₋₈) = I_{ges} errechnet. In diesem Zusammenhang sei erwähnt, dass es zweckmäßig ist, den einen erforderlichen Stromwert an einer stationären Strommessstelle 41 zu erfassen, die permanent oder auf Anforderung den gemessenen Strom, ggf. mit der zugehörigen Feldspannung misst. Dabei kann die stationäre Strommessstelle 41 sinnvoller Weise an dem Feld F angebaut werden, welches von allen Feldern die beste Leistungsausbeute nach der Errichtung der Anlage vorgewiesen hat. So kann der stationär gemessene Strom gleich als Referenzstrom I_{ref} herangezogen werden, an dem eine Beurteilung der erzeugte Leistung aller anderen Felder F vorgenommen werden kann. An dem Multiplizierglied 39 ist noch ein weiteres Speicherelement 43 angeschlossen, in welchem die Ergebnisse der Multiplikation zur weiteren Verwendung, z.B. zur Berechnung der theoretischen Leistung beliebiger Felder F, abgelegt sind.

Wurden in der Vergangenheit mehrere Felder F mit Minderleistung detektiert und ist es jetzt von Interesse, inwieweit sich die Summe der minderleistenden Felder auf die Gesamtleistung bemerkbar macht, kann z.B. der Strom I₃ des Feldes A₁F₃ mit dem defekten Modul S₃M₃ ermittelt werden, indem der Strom I₁ des ersten Feldes F₁ mit den beiden Verhältnissen V₁₋₂ und V₂₋₃ multipliziert wird und, wenn mehrere Wechselrichter WR vorhanden sind mit der Spannung des angeschlossenen Wechselrichter WR zur Ermittlung der Leistung multipliziert werden. Aufgrund des defekten Moduls M ist das Verhältnis VF₂₋₃ höher als im Normalfall und spiegelt so den bereits bekannten, geringeren Strom I₃ wieder. Auf diese Weise können alle zuvor aufgefallenen Felder F untersucht werden und die Summe der geringeren Leistung aller schadhaften Felder F kann mit nur einer Strommessung pro Anlage A errechnet werden. Im Falle, dass ein Strang S oder ein Feld F einen Strommesswert von Null aufweist, würde sich das Verhältnis V zum vorausliegenden und nachfolgenden Strang S oder Feld F mit Unendlich bzw. Null definieren. In diesem Fall wird für die Verkettung der Messwerte zur Leistungsfindung jegliches Verhältnis von Null oder Unendlich ausgeblendet und in Folge, ein Verhältnis V aus dem direkt davor und danach liegenden Strang S oder Feld F gebildet.

Ergänzend zu der Einspeisung der gemessenen Ströme I₂ und I₃ in den Verhältnisbilder 29 können die Stromwerte I₂ und I₃ auch direkt auf ein Vergleichsteil 45 gegeben werden, welches die Ströme I₂,I₃ direkt mit Referenzströmen vergleicht, die zu einem früheren Zeitpunkt gemessen und abgespeichert wurden. Analog kann das Strompaarwert I₂,I₃ an den Eingang eines Leistungsvergleichers 47 gelegt werden, der einen weiteren Eingang für den Wert der Spannung U₁ am Wechselrichter WR₁, oder bei Vorliegen mehrerer Wechselrichter WR auch entsprechend viele Eingänge für den Betriebsspannungswert U der jeweiligen WR. Schließlich ist noch ein Eingang am Leistungsvergleicher 47 vorgesehen, an dem ein Signal s₅, das die Referenzleistung P_{ref} entweder der Referenz-PV-Einheit, i.e. vorliegend des Referenzfeldes F₄, oder aber die Leistung früherer Messungen wiederspiegelt, als Vergleichsreferenzsignal anliegt. Der Leistungsvergleicher 47 weist einen Ausgang 49 auf, in welchem im Fall einer unzulässig hohen Abweichung zum Vergleichs-Referenzwert oder vom Leistungswert untereinander ein Warnsignal abgreifbar ist.

In der Figur 2 ist noch eine Recheneinheit 49 gezeigt, die an die Auswerteeinheit 3 angeschlossen ist und von dieser mit den multiplizierten Stromwerten I₁(I₁*V₁₋₂₎, (I₁*V₂₋₃), (I₁*V₃₋₄), ....(I₁*V₇₋₈) versorgt wird (*entspricht einer Multiplikation). In der Recheneinheit 49, werden die Ströme aller Felder F addiert und als Wert des Gesamtstroms I_{ges} der Anlage A₁ an ein weiteres Multiplizierglied 51 gegeben, in welches noch der Spannungswert U des Referenzfeldes, im Beispielsfall des Feldes F₄, eingegeben wird. Das Ausgangssignal s₆ des weiteren Multiplizierglieds 51 ist die theoretisch vorliegende Leistung P_{theoretisch}, die auf einem Display 53 angezeigt wird. Zusätzlich kann auf dem Display 53 die über den am Wechselrichter WR gemessenen Ist-Strom ermittelte real vorliegende momentane Leistung Pᵣₑₐₗ angezeigt werden, so dass ein kontinuierlicher visueller Vergleich der vorliegenden Leistung P mit der theoretisch zu erwartenden Leistung möglich ist.

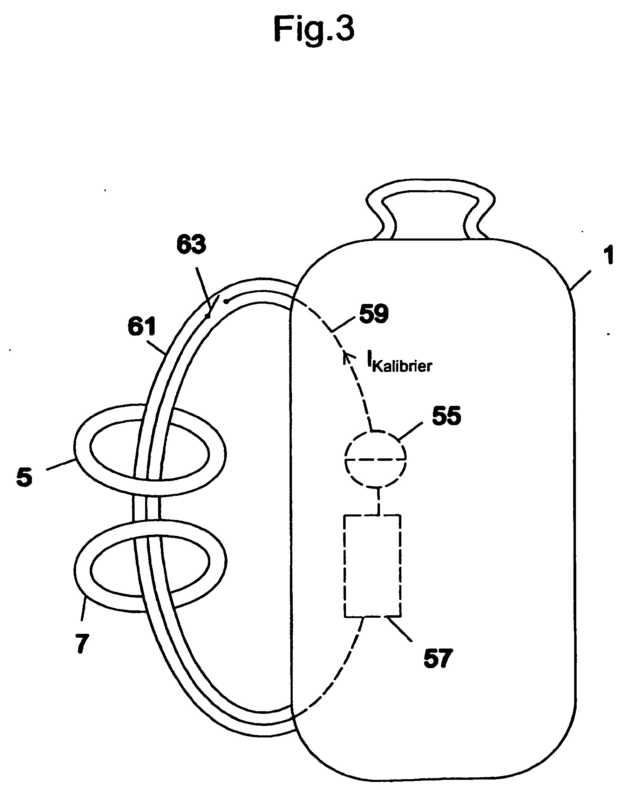

In der Figur 3 ist das Gehäuse der Vorrichtung 1 gezeigt, welches im Inneren eine integrierte Gleichstromquelle 55 besitzt, die über einen Messshunt 57 eine Leitung 59 mit einem Kalibrierstrom I_{kalibrier} speist. Die Leitung 59 verläuft teilweise durch das innere eines Bügels 61, der an dem Gehäuse angeformt ist. Der Bügel 61 und die Leitung 59 sind so dimensioniert, dass sie von den beiden Stromzangen 5,7 gleichzeitig umschlossen werden können. Über einen Schalter 63 wird der Kalibrierstromkreis geschlossen. Der Schalter 63 ist vorzugsweise als Druckknopf oder Hebel an der Gehäuseoberfläche vorgesehen. Prinzipiell ist es auch möglich, die Stromzangen 5,7 gleichzeitig an eine einzige Anschlussleitung 9,9' einer der PV-Einheiten A,S,F zur Zueinanderkalibrierung der beiden Messzangen 5,7 umgreifen zu lassen. Jedoch dient die zuvor beschriebene Kalibrierung über den Messshunt 57 der Präzisierung des absoluten Messwertes und ist somit der Zueinanderkalibrierung vorzuziehen.

Aus der vorstehenden Beschreibung ergibt sich, dass folgende Merkmale oder Merkmalskombinationen in Verbindung mit den angehängten Patentansprüchen sinnvolle Ausgestaltungen der Erfindung ergeben:
a) Wenn die Paarbildung bei der Strommessung nach Schritt i) an benachbarten PV-Einheiten (S,F,A) vorgenommen wird, wobei die Paare von benachbarten PV-Einheiten so gewählt werden, dass zumindest teilweise eine zusammen-hängende Kette von Paaren als Glieder gebildet wird;
b) Wenn in einem Schritt iv) zu einem späteren Zeitpunkt nach der Messwerterfassung gemäß Schritt i) an einer der PV-Einheiten (S,F,A) der vorliegende Strom (I) gemessen wird und dass in einem Schritt v) in einer Recheneinheit (49) aus dem vorliegenden Stromwert und den ins Verhältnis gesetzten abgespeicherten Messwerten des Schrittes iii) der Gesamtstrom oder, unter Einbeziehung der jeweiligen Betriebsspannungswerte (U) der PV-Einheiten, die theoretische Gesamtleistung der Photovoltaikanlage bestimmt wird;
c) Wenn bei jeder Messung nach Schritt i) eine Identifikation der Messstelle (MS), insbesondere der Ort der Messung, registriert wird und zusammen mit dem an dem Ort gemessenen Wert des Strompaares oder des daraus errechneten Verhältnisses (V) abgespeichert wird;
d) Wenn die PV-Einheit ein Strang (S) aus mehreren in Reihe geschalteten PV-Modulen (M) ist;
e) Wenn die PV-Einheit ein Feld (F) aus mehreren parallel geschalteten Strängen (S) ist;
f) Wenn die Messwerte jeden Paares zusammen mit der Identifikation drahtlos an eine Datenverarbeitungsstelle (27) gesendet werden;
g) Wenn der Ort der Messung mittels GPS, eines RFID Chip oder mittels eines Barcodes zum Zeitpunkt der Stromerfassung mittels eines geeigneten Positionsregistrier-mittels (19), z.B. einem Lesegerät, mit aufgenommen wird;
h) Wenn die von der Messdatenerfassungseinheit (3) bereitgestellten Stromwerte (I) das arithmetische Mittel einer Vielzahl von kurz hintereinander vorgenommenen Strommessungen ist, welche dann auch für das Insverhältnissetzen herange-zogen werden können;
i) Wenn zusammen mit einer Abspeicherung des Messwerts des Gleichstroms (I) auch der, z.B. an einem Wechselrichter (WR) gemessene Betriebsspannungswert (U) zwischen den Anschlussleitungen (9,9',11,11',13,13') der PV-Einheit (S,F,A) abgespeichert wird;
j) Wenn die Stromzangen (5,7) gleichzeitig eine einzige Anschlussleitung (9,9',11,11',13,13') einer der PV-Einheiten (S,F,A) zur Zueinanderkalibrierung der beiden Messzangen umgreifen;
k) Wenn eine einzige der PV-Einheiten (S,F,A) mittels Strommessung, Spannungsmessung, Einstrahlungsintensität und direkter oder indirekter Temperaturmessung am Halbleiter als Referenz-PV-Einheit nach dem für Photovoltaikmodule zur Ermittlung der Normleistung festgelegten, standardisierten Testbedingungen (STC) ermittelt wird, um die Normleistung (STC) einer, mittels der Stromwertpaare verketteten PV-Einheit zu errechnen;
l) Wenn die Vorrichtung eine stationäre Stromstärke- und Spannungsmesseinheit (41) umfasst, die den Strom (14) einer einzigen der PV-Einheiten (F4) misst, und das Ergebnis zur Verarbeitung an die Recheneinheit (49) weiterleitet, die aus den Verhältnissen (V) der Stromwertpaare und dem stationär ermittelten Stromwert (14), sowie dem oder den zu den Stromwertpaaren ermittelten Spannungswert(en) (U) und dem stationär ermittelten Spannungswert die theoretische Gesamtleistung (P) der Anlage errechnet.

### Bezugszeichenliste

- A: Photovoltaikanlage
- F: Photovoltaikfeld
- S: Photovoltaikstrang
- M: Photovoltaikmodul
- P: Leistung
- V: Verhältnis
- MS: Messstelle
- WR: Wechselrichter
- 1: Vorrichtung zur Durchführung des Verfahrens
- 3: Messdatenerfassungseinheit
- 5,7: Stromzangen
- 9,9': Anschlussleitungen eines Feldes
- 11,11': Anschlussleitungen eines Strangs
- 13,13': Anschlussleitungen zum Wechselrichter
- 15: Wählschalter
- 17a,b: Stromzangenleitungen
- 19: Empfänger
- 21: Barcode
- 23: Auswerteeinheit
- 25: Antenne
- 27: externe Datenverarbeitungsstelle
- 29: Verhältnisbildner
- 31: Vergleichseinheit
- 33: Speicherelement für Verhältnisse
- 35: Speicher für Referenzwerte
- 37: Verknüpfungselement
- 38: Datenspeicherelement für Datenpaar Verhältnis / Messstelle
- 39: Multiplizierglied
- 41: stationäre Messstelle
- 43: weiterer Speicher
- 45: Vergleichsteil für Ströme
- 47: Leistungsvergleicher
- 49: Recheneinheit
- 51: weiteres Multiplizierglied
- 53: Display
- 55: Gleichstromquelle
- 57: Messshunt
- 59: Leitung
- 61: Bügel
- 63: Schalter

## Patentansprüche

1. Messverfahren zur Ermittlung von defekten PV-Einheiten (S,F,A) einer Photovoltaikanlage mit mindestens drei PV-Einheiten (S,F,A), bei dem die Ströme (I) der PV-Einheiten (S,F,A) zum Teil zeitgleich gemessen werden, und die gemessenen Stromwerte einer Messdatenerfassungseinheit (3) zugeführt werden, welche die Messwerte für eine Ermittlung der Leistungsfähigkeit der PV-Einheiten einer Auswerteeinheit (23) bereitstellt, **dadurch gekennzeichnet, dass** die Messung der Ströme mittels zweier Stromzangen (5,7) erfolgt, die in einem ersten Schritt paarweise vor Ort um die Anschlussleitungen von zwei der PV-Einheiten (S,F,A) platziert werden, um deren Ströme zeitgleich zu messen, dass in einem zweiten Schritt mindestens eine der beiden Stromzangen umgesetzt wird, um die Ströme eines anderen PV-Einheiten Paares zeitgleich zu messen, und dass
i) der zweite Schritt wiederholt wird, bis um jede Anschlussleitung der zu untersuchenden PV-Einheiten zumindest einmal eine der beiden Stromzangen platziert und der Strom gemessen wurde,
ii) die beiden zu jedem Paar gemessenen Stromwerte zueinander ins Verhältnis (V) gesetzt werden;
iii) die Verhältnisse (V) in einem elektronischen Speicherelement (33) abgelegt werden, und
iv) die Verhältnisse (V) mit zu einem späteren Zeitpunkt ermittelten Verhältnissen verglichen werden.

2. Messverfahren nach Anspruch 1, **dadurch gekennzeichnet, dass** bei baugleichen PV-Einheiten (S,F,A), die auf derselben Betriebsspannung (U) arbeiten, die PV-Einheit mit geringerem Strom (I) als die PV-Einheit geringerer Leistung (P) ermittelt wird.

3. Messverfahren nach Anspruch 1, **dadurch gekennzeichnet, dass** bei baugleichen PV-Einheiten (S,F,A), die auf unterschiedlicher Betriebsspannung (U1,U2) arbeiten, die PV-Einheit mit geringerem Produkt von gemessenem Strom (I) und ermittelter Betriebsspannung der dem jeweiligen Stromwert zugeordneten PV-Einheit als die PV-Einheit geringerer Leistung (P) ermittelt wird.

4. Messverfahren nach Anspruch 1, **dadurch gekennzeichnet, dass** bei nichtbau-gleichen PV-Einheiten (S,F,A), die auf derselben Betriebsspannung (U) arbeiten, die PV-Einheit mit geringerem Strom als die PV-Einheit geringerer Leistung (P) ermittelt wird.

5. Messverfahren nach Anspruch 1, **dadurch gekennzeichnet, dass** bei nichtbau-gleichen PV-Einheiten (S,F,A), die auf unterschiedlicher Betriebsspannung (U1,U2) arbeiten, die PV-Einheit mit geringerem Produkt von gemessenem Strom und ermittelter Betriebsspannung der dem jeweiligen Stromwert zugeordneten PV-Einheit als die PV-Einheit geringerer Leistung (P) ermittelt wird.

6. Messverfahren nach Anspruch 2 oder 4, **dadurch gekennzeichnet, dass** die PV-Einheiten (S,F,A) während der zeitgleichen Messung auf den gleichen Betriebs-spannungswert (U) gesetzt werden oder am selben Wechselrichter (WR) angeschlossen sind.

7. Messverfahren nach einem der Ansprüche 1 bis 6 **gekennzeichnet durch** zeitgleiches Feststellen der Ströme (I) **durch** je eine Anschlussleitung (9,9',11,11',13,13') der beiden PV-Einheiten (S,F,A), **durch** Bildung des Verhältnisses (V) der beiden Ströme zueinander und **durch** Vergleich des Verhältnisses mit einem Vergleichsverhältnis, welches aus Messwerten der Gleichströme gebildet wurde, die **durch** die je eine Anschlussleitung der beiden PV-Einheiten zu einem früheren Zeitpunkt als dem Zeitpunkt der Feststellung geflossen waren.

8. Verfahren nach einem der Ansprüche 1-7, **dadurch gekennzeichnet, dass** in einem Schritt iv) zu einem späteren Zeitpunkt nach der Messwerterfassung gemäß Schritt i) an einer der PV-Einheiten (S,F,A) der vorliegende Strom (I) gemessen wird und dass in einem Schritt v) in einer Recheneinheit (49) aus dem vorliegenden Stromwert und den ins Verhältnis gesetzten abgespeicherten Messwerten des Schrittes iii) der Gesamtstrom oder, unter Einbeziehung der jeweiligen Betriebsspannungswerte (U) der PV-Einheiten, die theoretische Gesamtleistung der Photovoltaikanlage bestimmt wird.

9. Verfahren nach einem der Ansprüche 1-8, wobei jede PV-Einheit (S,F,A) mit einer ersten und einer zweiten Anschlussleitungen (9,9';11,11' oder 13,13') versehen ist, **dadurch gekennzeichnet, dass** die Strommessung bei den jeweils zwei benachbarten PV-Einheiten (S, F, A) bei einer der PV-Einheiten an der ersten Anschlussleitung (9;11 oder 13) und bei der anderen PV-Einheit an der zweiten Anschlussleitung (9';11' oder 13') gemessen wird.

10. Verfahren nach einem der Ansprüche 2 oder 4, **dadurch gekennzeichnet, dass** alle PV-Einheiten (S,F,A) auf denselben Wechselrichter (WR) geschaltet sind, der während aller Gleichstrommessungen auf einer konstanten Betriebs-spannung (U) gehalten wird, indem der MPP (Maximal Power Point) - Regler des Wechselrichters auf den konstanten Spannungswert (U) fixiert wird.

11. Verfahren nach einem der Ansprüche 3 oder 5-10, **dadurch gekennzeichnet, dass** die PV-Einheiten (S,F,A) zum Teil auf verschiedene Wechselrichter (WR1, WR2) geschaltet sind, die während aller Gleichstrommessungen auf einer konstanten Spannung (U) gehalten werden, indem der MPP (Maximal Power Point) - Regler aller Wechselrichter auf den konstanten Spannungswert fixiert wird.

12. Mobile Vorrichtung zur Durchführung des Verfahrens nach einem der Ansprüche 1 bis 11, **gekennzeichnet durch** eine an zwei Stromzangen (5, 7) angeschlossene Messdatenerfassungseinheit (3) zur zeitgleichen Messung der beiden Gleichströme eines PV-Einheiten Paares, Mittel zur Identifikation des Ortes der Messung und eine Auswerteeinheit (23) oder eine drahtlos angebundene Datenverarbeitungsstelle (27), wobei die Auswerteeinheit oder die Datenverarbeitungsstelle dazu eingerichtet ist, die beiden Gleichströme miteinander ins Verhältnis zu setzen und zusammen mit dem Ort der Messung abzuspeichern.

13. Mobile Vorrichtung zur Durchführung des Verfahrens nach Anspruch 12, **gekennzeichnet durch** ein Positionsregistriermittel (21,21a) zur Erfassung der Position der Messzangen an den Leitungen (9,9',11'11',13,13') zum Zeitpunkt der Messung und mit einer Antenne ((25) zum Übermitteln der Mess- und Positionsdaten und/oder mit einem Datenspeicherelement (38) zum Einschreiben der Mess- und Positionsdaten.

14. Mobile Vorrichtung nach Anspruch 12 oder 13, **gekennzeichnet durch** eine integrierte Gleichstromquelle (55), die über einen Messshunt (57) eine Leitung (59) mit einem Kalibrierstrom speist, wobei die Leitung zur gleichzeitigen Aufnahme beider Stromzangen (5,7) ausgelegt ist.

## Claims

1. Measurement technique for the determination of defective PV units (S,F,A) on a photovoltaic system with at least three PV units (S,F,A), in which the currents (I) of the PV units (S,F,A) are partially measured simultaneously and the measured electrical values are sent to a measured data acquisition unit (3), which provides the measured values for a determination of the capability of the PV units (23), **characterized by** the fact the currents are measured by two current clamps (5,7) which, in an initial step, are arranged in pairs on location around the connecting cables of two of the PV units (S,F,A) in order to measure their currents simultaneously, such that in a second step, at least one of the two current clamps is realized in order to measure the current of another pair of PV units simultaneously, and that
i) the second step is repeated until every service line of the PV units to be examined has been positioned on at least one of the two current clamps and the electricity has been measured,
ii) that both of the electrical values measured at each pair are brought into a ratio (V) with each other;
iii) the ratios (V) are saved in an electronic storage element (33), and
iv) the ratios (V) are compared with ratios which are determined at a later instant of time.

2. Measurement process according to claim 1, **characterized by** the fact that with PV units of the same design (S,F,A) which operate on the same working voltage (U), the PV unit with a lower current (I) is determined as the PV unit with a lower power output (P).

3. Measurement process according to claim 1, **characterized by** the fact that with PV units of the same design (S,F,A) which operate on a different working voltage (U1,U2), the PV unit with a lower product of measured current (I) and determined working voltage of the PV unit assigned to the corresponding current value is determined as the PV unit with the lower power output (P).

4. Measurement process according to claim 1, **characterized by** the fact that with PV units of a different design (S,F,A) which operate on the same working voltage (U), the PV unit with a lower current is determinded as the PV unit with a lower power output (P).

5. Measurement process according to claim 1, **characterized by** the fact that with PV units of a different design (S,F,A) which operate on a different working voltage (U1,U2), the PV unit with a lower product of measured current and determined working voltage of the PV unit assigned to the corresponding current value is determined as the PV unit with the lower power output (P).

6. Measurement process according to claim 2 or 4, **characterized by** the fact that the PV units (S,F,A) are set at the same working voltage value (U) during the simultaneous measurement or are connected to the same inverter (WR).

7. Measurement process according to one of the claims 1 to 6, **characterized by** the simultaneous determination of the currents (I) using one connecting cable each (9,9',11,11',13,13') of both PV units (S,F,A), by mapping the ratio (V) of both currents to each other, and by comparing the ratio with a comparison ratio which was mapped from the measured value of the direct currents which had flowed from each of the connecting cables on the two PV units at an earlier instant of time than the instant of time of the determination.

8. Process according to one of the claims 1-7, **characterized by** the fact than in a step iv) at a later instant of time following the determination of the measured value according to step i), the current (I) present at one of the PV units (S,F,A) is measured, and that in a step v), in an arithmetic-logic unit (49), the total current present is determined from the current value present and the stored measured values of step iii) that have been placed into a ratio, or, under consideration of the appropriate working voltage values (U) of the PV units, the theoretical total power of the photovoltaic system is determined.

9. Process according to one of the claims 1-8, whereby every PV unit (S,F,A) is equipped with a first and a second connecting cable (9,9';11,11' or 13,13'), **characterized by** the fact that the measurement of the current on the two neighboring PV units (S, F, A) is measured on one of the PV units at the first connecting cable (9;11 or 13), and on the other PV unit, that it is measured on the second connecting cable (9';11' or 13').

10. Process according to one of claims 2 or 4, **characterized by** the fact that all PV units (S,F,A) are initialized on the same inverter (WR), which is kept at a constant working voltage (U) throughout all of the current measurements, such that the MPP (Maximum Power Point) - the controller of the inverter - is kept at the constant voltage value (U).

11. Process according to one of claims 3 or 5-10, **characterized by** the fact that all PV units (S,F,A) are partially initialized on different inverters (WR1, WR2), which are kept at a constant voltage (U) throughout all of the direct current measurements, such that the MPP (Maximum Power Point) - the controller of all the inverters - is kept at the constant voltage value.

12. Mobile device for completing the process according to one of the claims 1 to 11, **characterized by** a measured data acquisition unit (3) which is connected to two current clamps (5,7) for the simultaneous measurement of both direct currents of a pair of PV units, the medium for the identification of the location of the measurement and an evaluation unit (23) or a wireless-connected data processing system (27), whereby the evaluation unit or the data processing system is set up to place both direct currents into a ratio with each other and to save them with the location of the measurement.

13. Mobile device for completing the process according to claim 12, **characterized by** a position registration system (21,21 a) for determining the position of the measurement clamps on the cables (9,9',11'11 ',13,13') at the instant of time of the measurement and with an antenna (25) for transferring the measurement and position data and/or with a data storage element (38) for the recording of the measurement and position data.

14. Mobile device according to claim 12 or 13, **characterized by** an integrated direct current source (55), which feeds a calibration current to a cable (59) via a measuring shunt (57), whereby the cable is configured for the simultaneous fitting of both of the current clamps (5,7).

## Revendications

1. Procédure de mesure visant à identifier les unités PV (S, F, A) défectueuses au sein d'une installation photovoltaïque comprenant aux moins trois unités PV (S, F, A), qui consiste à mesurer simultanément certains courants (I) des unités PV (S, F, A) et à transmettre les valeurs de courant obtenues à une unité de collecte des données de mesure (3), laquelle met les données de mesure à disposition d'une unité d'analyse (23), **caractérisée en ce que** la mesure des courants est effectuée à l'aide de pinces ampèrimétriques (5,7) d'abord positionnées par paires autour des câbles de raccord de deux des unités PV afin de mesurer leur courant simultanément, **en ce que** dans un second temps, au moins une des deux pinces ampèrimétriques est déplacée pour mesurer simultanément les courants d'une autre paire d'unités PV, et **en ce que**
i) la seconde étape est répétée jusqu'à ce que le courant de chaque câble de raccord de l'unité PV à analyser ait été mesuré au moins une fois à l'aide d'une des deux pinces ampèrimétriques,
ii) **en ce que** les deux valeurs de courant mesurées pour chaque paire sont mises en relation (V) ;
iii) **en ce que** les mises en relation (V) sont enregistrées dans un module d'enregistrement électronique (33), et
iv) **en ce que** les mises en relation (V) soient comparées avec d'autres rapports établis ultérieurement.

2. Procédure de mesure d'après la revendication 1, **caractérisée en ce que** lorsque des unités PV (S, F, A) de même construction fonctionnent avec la même tension de service (U), l'unité PV présentant le courant le plus faible (I) est définie comme étant l'unité PV la moins performante (P).

3. Procédure de mesure d'après la revendication 1, **caractérisée en ce que** lorsque des unités PV (S, F, A) de même construction fonctionnent avec différentes tensions de service (U1, U2), l'unité PV pour laquelle le produit du courant mesuré (I) et de la tension de service déterminée de l'unité PV correspondant à la valeur de courant respective est le plus faible est définie comme étant l'unité PV la moins performante (P).

4. Procédure de mesure d'après la revendication 1, **caractérisée en ce que** lorsque des unités PV (S, F, A) de construction différente fonctionnent avec la même tension de service (U), l'unité PV présentant le courant le plus faible (I) est définie comme étant l'unité PV la moins performante (P).

5. Procédure de mesure d'après la revendication 1, **caractérisée en ce que** lorsque des unités PV (S, F, A) de construction différente fonctionnent avec différentes tensions de service (U1, U2), l'unité PV pour laquelle le produit du courant mesuré (I) et de la tension de service déterminée de l'unité PV correspondant à la valeur de courant respective est le plus faible est définie comme étant l'unité PV la moins performante (P).

6. Procédure de mesure d'après la revendication 2 ou 4, **caractérisée en ce que** durant la mesure simultanée, les unités PV (S, F, A) sont réglées sur la même tension de service (U) ou connectées au même onduleur (WR).

7. Procédure de mesure d'après une des revendications 1 à 6, **caractérisée par** une détermination simultanée des courants (I), par la présence d'un câble de raccord (9,9',11,11',13,13') pour chacune des deux unités PV (S,F,A), par la mise en relation (V) des deux courants et par la comparaison de ce rapport avec un rapport de référence obtenu à partir des valeurs de mesure des courants continus qui ont traversé un des câbles de raccord des deux unités PV à un moment antérieur à celui de la mesure.

8. Procédure d'après l'une des revendications 1 à 7, **caractérisée en ce que** dans le cadre d'une étape iv), ultérieurement à la collecte des données de mesures prévue durant l'étape i), le courant présent soit mesuré sur une des unités PV (S, F, A) et que durant une étape v), la performance théorique globale de l'installation photovoltaïque soit déterminée au sein d'une unité de calcul (49), à partir de la valeur de courant obtenue et des valeurs de mesures enregistrées et mises en relations durant l'étape iii) et en tenant compte des différentes valeurs de tension de service (U) des unités PV.

9. Procédure d'après une des revendications 1 à 8, **caractérisée en ce que** chaque unité PV (S,F,A) est équipée d'un premier et d'un second câble de raccord (9,9';11,11' ou 13,13'), **en ce que** la mesure du courant de deux unités PV (S, F, A) voisines est effectué sur le premier câble de raccord (9;11 ou 13) sur l'une d'elles et sur le second câble de raccord sur la seconde (9';11' ou 13').

10. Procédure d'après l'une des revendications 2 ou 4, **caractérisée en ce que** toutes les unités PV (S,F,A) sont commutés sur le même onduleur (WR), qui est maintenu à une tension de service (U) constante durant toutes les mesures de courant continu, le MPP (Maximal Power Point) - régulateur de l'onduleur étant fixé à une valeur de tension (U) constante.

11. Procédure d'après l'une des revendications 3 ou 5 à 10, **caractérisée en ce que** certaines unités PV (S,F,A) sont commutées sur différents onduleurs (WR1, WR2), maintenus à une tension de service (U) constante durant toutes les mesures de courant continu, le MPP (Maximal Power Point) - régulateur de tous les onduleurs étant fixé à une valeur de tension (U) constante.

12. Dispositif mobile permettant de mettre en oeuvre la procédure d'après l'une des revendications 1 à 11, **caractérisé par** une unité de collecte des données de mesure (3) connectée à deux pinces ampèrimétriques (5, 7) permettant de mesurer simultanément les deux courants continus d'une paire d'unités PV, un outil d'identification du point de mesure et une unité d'analyse (23) ou une interface de traitement de données connectée sans fil (27), l'unité d'analyse ou l'interface de traitement des données étant conçue pour mette en relation les deux courants continus et de les enregistrer avec le site de la mesure.

13. Dispositif mobile permettant de mettre en oeuvre la procédure d'après la revendication 12, **caractérisée par** un outil d'enregistrement de la position (21, 21 a) permettant d'enregistrer la position des pinces ampèrimétriques sur les câbles (9,9',11'11',13,13') au moment de la mesure et par une antenne (25) permettant de transmettre les données de mesure et de position et/ou une unité d'enregistrement de données (38) pour sauvegarder les données de mesure et de position.

14. Dispositif mobile d'après la revendication 12 ou 13, **caractérisée par** une source de courant continu intégrée (55), qui alimente un câble (59) en courant de calibration via un shunt de mesure (57), le câble étant conçu pour accueillir les deux pinces ampèrimétriques (5, 7) simultanément.
